# EUROPÄISCHE PATENTSCHRIFT

(11) **EP 0 699 826 B1**
(45) Veröffentlichungstag und Bekanntmachung des Hinweises auf die Patenterteilung: **03.03.1999**
(21) Anmeldenummer: 95111957.7
(22) Anmeldetag: 29.07.1995
(51) Int. Cl.: F01M 1/10, B04B 5/00, B01D 36/04

(54) **Fluidkreislauf mit einem Hauptstromfilter**
Fluid circuit with a filter in the main flow
Circuit de liquide avec un filtre au courant principal

(30) Priorität: 30.08.1994 DE 4430751
(43) Veröffentlichungstag der Anmeldung: 06.03.1996
(73) Patentinhaber: FILTERWERK MANN & HUMMEL GMBH, 71631 Ludwigsburg (DE)
(72) Erfinder: Erdmannsdörfer, Hans, D-75335 Dobel (DE); Schetter, Martin, D-74354 Besigheim (DE); Weindorf, Martin, D-70806 Kornwestheim (DE)
(74) Vertreter: Voth, Gerhard, Dipl.-Ing.

(56) Entgegenhaltungen:
- EP-A- 0 606 578
- DE-A- 3 742 455
- DE-B- 1 166 155
- GB-A- 735 658
- US-A- 2 796 075

## Beschreibung

Die Erfindung betrifft einen hydraulischen Fluidkreislauf mit einem Hauptstromfilter und einer im Nebenstrom angeordneten Zentrifuge. Derartige Vorrichtungen kommen zum Beispiel bei der Versorgung von Verbrennungsmotoren mit gereinigtem Schmieröl zur Anwendung und sind zum Beispiel aus der EP A 0 606 578 bekannt.

Der Schmierölkreislauf im Verbrennungsmotor besteht üblicherweise aus einer Ölpumpe die aus einer Fluidwanne das Öl durch Ölkühler, Hauptstromfilter mit Umgehungsventil, durch die Schmierstellen fördert. Danach fließt das Schmieröl in die Fluidwanne zurück. Ein Abriegelventil sorgt dafür, den mit der Motordrehzahl linear ansteigenden Druck im Ölkreislauf, der durch die ebenfalls mit der Drehzahl linear ansteigenden Fördermenge der Ölpumpe bewirkt wird, bei ca. 4 bis 5 bar abzuschneiden. Damit wird gleichzeitig die einzusetzende Pumpenleistung begrenzt. Weiterhin kann zur Abscheidung von kleinsten Teilchen im Schmieröl eine Zentrifuge im Nebenstrom des Ölkreislaufs angeordnet werden. Das hier gereinigte Öl wird direkt in die Fluidwanne zurückgeleitet. Vor der Zentrifuge ist ein Ventil angebracht, welches bei geringem Pumpendruck die Ölzufuhr zur Zentrifuge stoppt.

Durch den Einbau von Zentrifugen im Nebenstrom entsteht somit ein zusätzlicher Aufwand durch das nötige Regelventil vor der Zentrifuge. Hierfür muß nachteilhafterweise ein zusätzlicher Einbauraum vorgesehen werden. Es ist somit Aufgabe der Erfindung den entstehenden Kostenaufwand sowie Platzverbrauch für die Regelmechanismen im Ölkreislauf zu minimieren. Erfindungsgemäß wird diese Aufgabe dadurch gelöst, daß das Abregelventil im Fluid kreislauf sowie das Ventil zum Einstellen des Mindestansprechdrucks der Zentrifuge in ein einziges mehrstufiges Ventil integriert wird. Dies spart Platz und Kosten.

Weiterhin kann man vorteilhafterweise vorsehen, daß das Ventil wenigstens zwei wegversetzte Bohrungen aufweist. Eine zusätzliche Bohrung entlüftet das in einem drucklosen Raum mündende Ventil.

Eine andere vorteilhafte Weiterbildung sieht vor, daß das Ventil so angeordnet ist, daß eine erste Bohrung mittels eines Fluidkanals mit der Zentrifugenachse verbunden ist.

Weiter kann man vorteilhafterweise vorsehen, daß eine zweite Bohrung mittels eines Rücklfußkanals, vorzugsweise den Zentrifugenabfluß, mit der Fluidwanne (Ölwanne) verbunden ist, dies sinnvollerweise im Zentrifugengehäuse.

Eine vorteilhafte Weiterbildung sieht vor, daß das Ventil nach dem Hauptstromfilter angeordnet ist, dies beugt Funtionsstörungen, die durch Verschmutzungen verursacht werden, vor. Der durch Verschmutzung verursachte Druckabfall muß nicht durch einen erhöhten Abregeldruck vorgehalten werden.

Desweiteren kann man vorteilhafterweise vorsehen, daß das Ventil vor dem Hauptstromfilter angeordnet ist, dies spart vor allem Platz.

Eine vorteilhafte Weiterbildung sieht vor, daß eine Hohlniete als Düse in der Zentrifuge ausgebildet ist. Dies beugt z.B. durch Stanzgrate entstehenden Strömungsverlusten vor und ist vergleichsweise kostengünstig.

Weiter kann man vorteilhafterweise vorsehen, daß die aus einem Rohr gefertigte Achse 5 mit einem vorwiegend elastomeren Dichtstopfen 25 und/oder einem vorwiegend elastomeren Ring 26 in das Gehäuse 1 gesteckt ist, damit entfallen die sonst gebräuchlichen Gewinde auf der Achse und durch die Verwendung von Rohrmaterial ein weiterer Fertigungsschritt, das Bohren des Ölzulaufs.

Eine andere vorteilhafte Weiterbildung sieht vor, daß der Bördel 18 des Zentrifugenrotors, bestehend aus Topf 16 und Deckel 17 auf der dem Düsenboden entgegenstehenden Seite angeordnet ist.

Damit wird der Durchmesser auf dem die Düsenbohrungen angeordnet sind nicht durch den für den Bördel-Gegehalter freizuhaltenden Ringraum 27 eingeschränkt. Die Düsen haben deshalb, bezogen auf den Außendurchmesser und das Einsatzgebiet, z.B. im PKW-Bereich, einen ca. 25 % größen Hebelarm und erzeugen damit ein entsprechend größeres Drehmoment und größere Drehzahlen, was in besseren Abscheidegraden resultiert.

Eine vorteilhafte Weiterbildung sieht vor, daß die an sich lose Achse 5 mit einer Arretierung 28 befestigt ist.

Dadurch kann die Lagerung fast vollständig im Innenrohr bearbeitet werden, da das Innenrohr im Deckel nicht eingebördelt ist. Das hat den Vorteil, daß Schmutz und Späne, die beim Ausreiben der Lagerung entstehen und bei Bearbeitung im fertigen Rohr praktisch nicht ausgewaschen werden können nicht als Grundschmutz mit der Zentrifuge geliefert werden. Gleichzeitig ist dies durch Entfall des Bördelns kostengünstiger und bezüglich Maßhaltigkeit besser als die gebördelte Variante. Je nachdem ist die Verwendung der Arretierung oben, unter oder beidseits möglich.

Eine vorteilhafte Weiterbildung sieht vor, daß im Zentrifugenrotor ein insbesondere aus Kunststoff bestehender Hohlkörper 29 eingesetzt ist.

Der sich als zäher, klebriger Ringmantel ablagernde Schmutz aus dem Rotor kann somit entnommen werden. Der Schmutzkuchen 30 lagert sich in diesem Hohlkörper ab und kann nach Öffnen des Rotors zusammen mit dem Kunststoffteil entsorgt werden.

Eine vorteilhafte Weiterbildung sieht vor, daß der Zentrifugenrotor mittels eines Verschlußmechanismuses32 öffenbar ist und mit einem Kunststoffhohlkörper 29 im Innern versehen ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. Die Zeichnungen zeigen:
- Figur 1: zeigt einen Schmierkreislauf mit Nebenstromzentrifuge und kombiniertem Mindestdruck und Abregelventil auf der Rohöl seite,
- Figur 2: zeigt eine Vorrichtung nach Figur 1 im Schnitt,

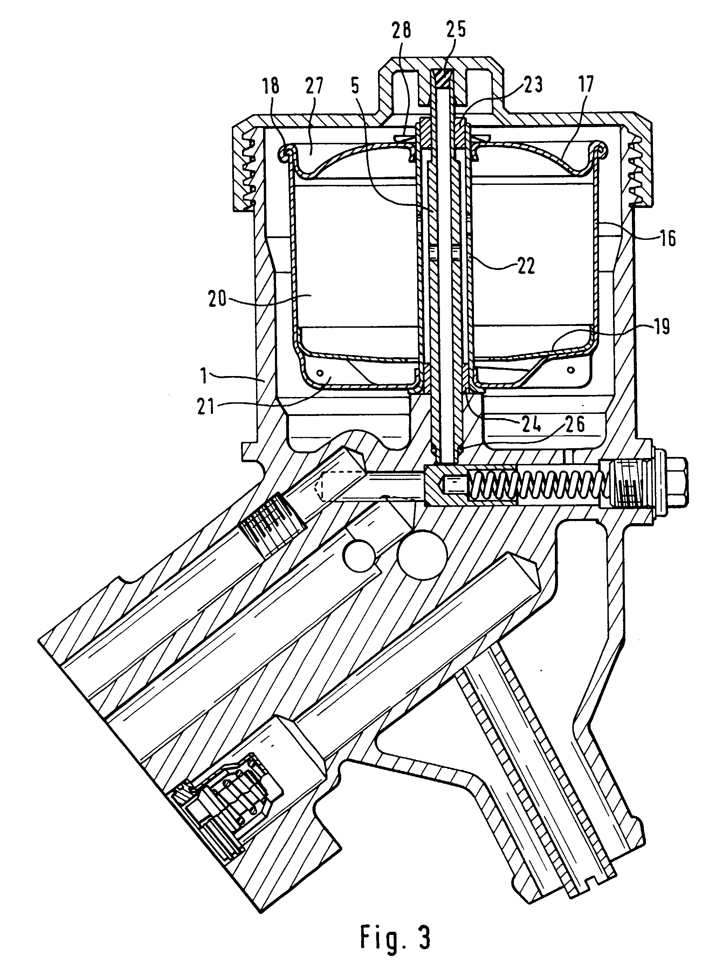

- Figur 3: zeigt den Zentrifugenrotor und dessen Lagerung im Schnitt,

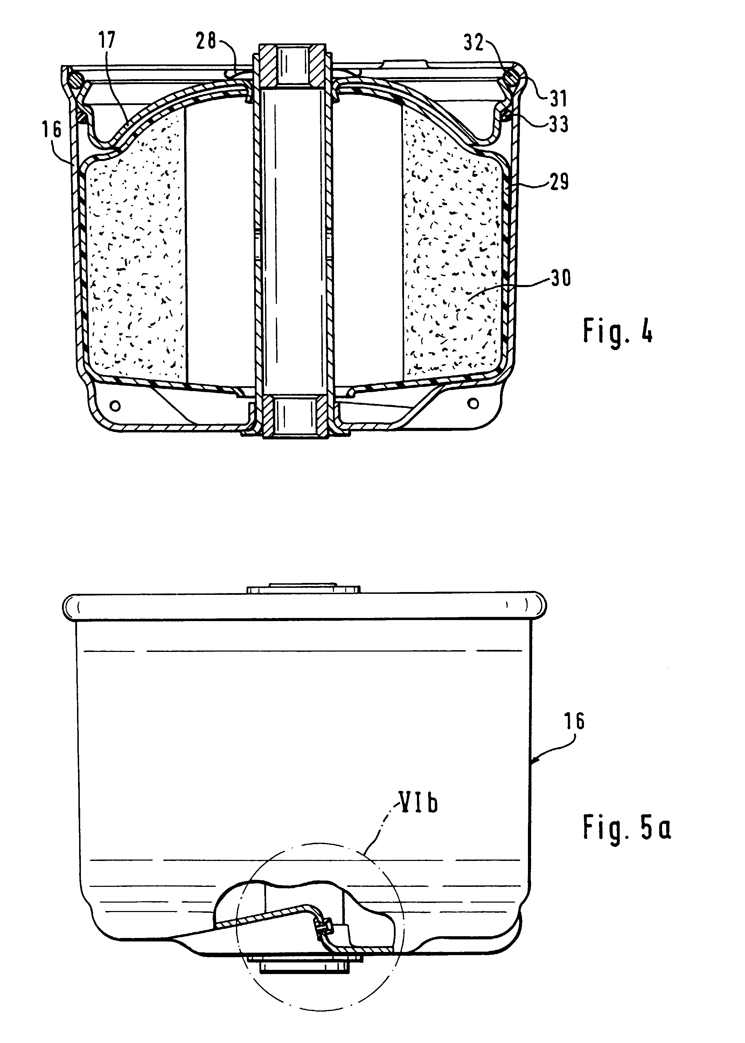

- Figur 4: zeigt einen Zentrifugenrotor mit eingesetztem Hohlkörper,

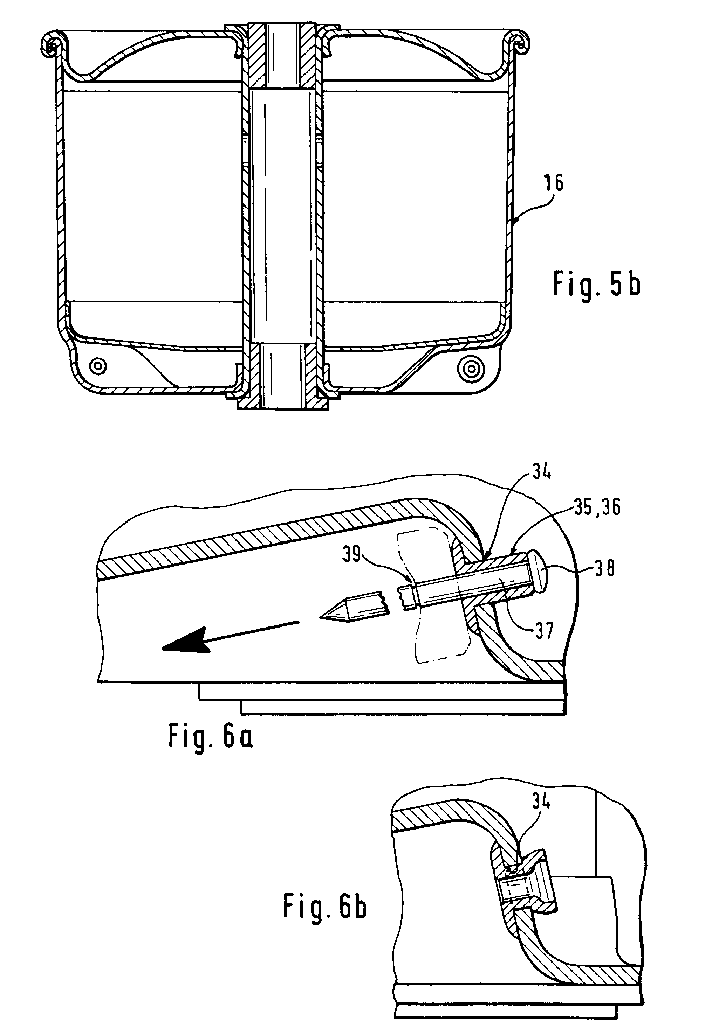

- Figuren 5 und 6: zeigen Düsenvarianten.

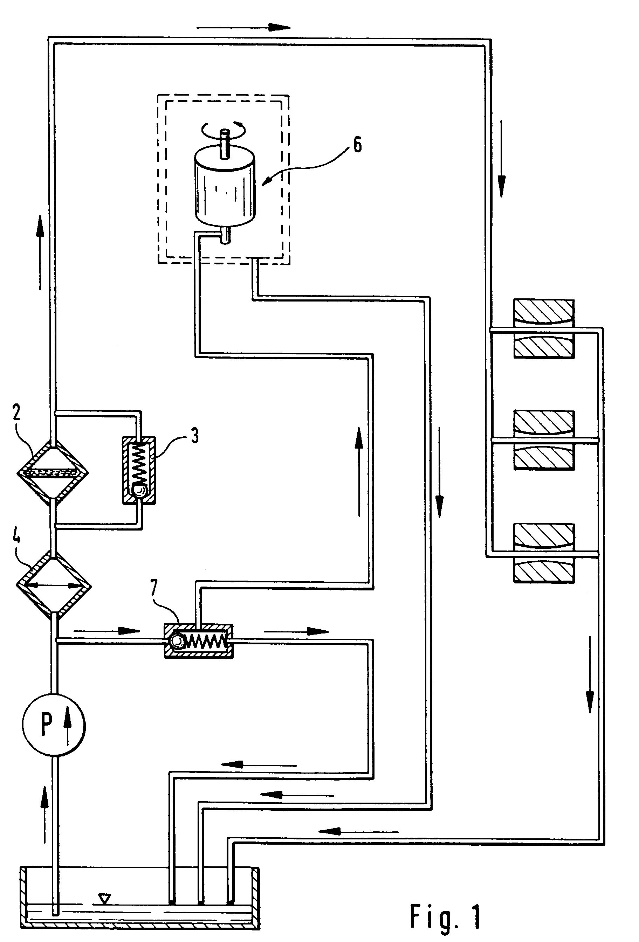

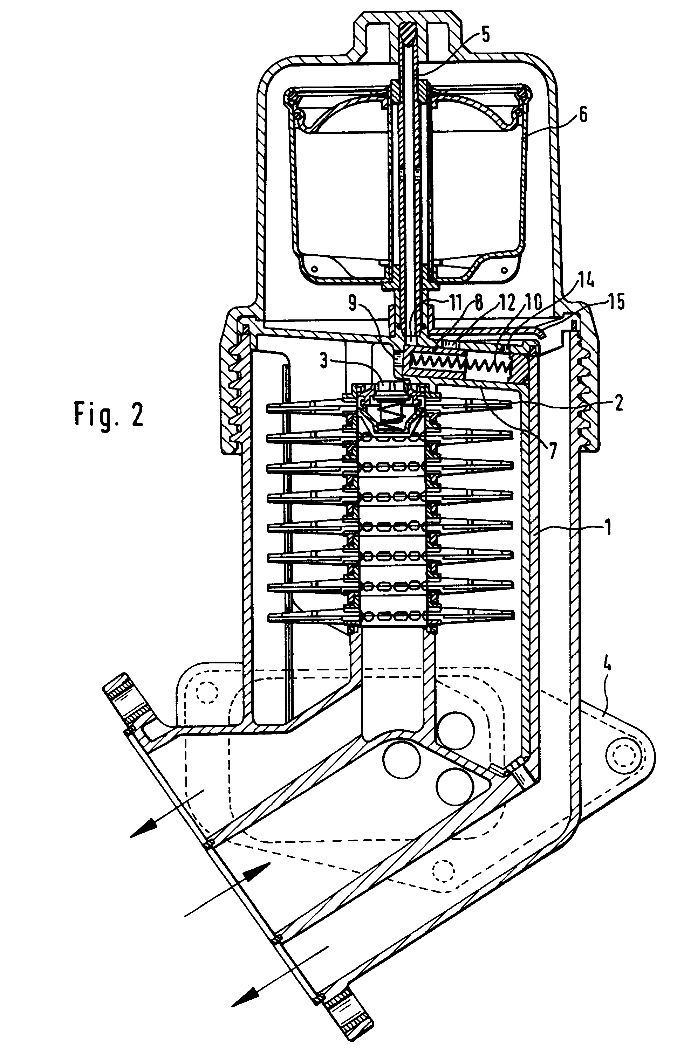

Dieses in Figur 1 und 2 dargestellte Filtermodul besteht aus dem Gehäuse 1, einem Hauptstromfilter 2 mit Bypassventil 3, einem Ölkühler 4, einer auf einer stehenden Achse 5 gelagerten Zentrifuge 6 im Nebenstrom sowie dem kombinierten Mindestdruck- und Abregelventil 7, das auf der Rohölseite angeordnet ist.

Der Kolben 8 des Ventils 7 wird durch die Bohrung 9 mit Drucköl beaufschlagt. Entgegen der entstehenden Druckkraft wirkt die vorgespannte Feder 10. Auf der Federseite wird das Ventil durch eine Bohrung 14 entlüftet. Bei einem Druck von, je nach Auslegung, von ca. 1,5 bis 2 bar wird der Kolben so weit verschoben, daß er die Ölzulaufbohrung 11 zur hohlen Zentrifugenachse und damit zur Zentrifuge öffnet. Mit steigender Motordrehzahl erhöht sich der Druck weiter. Bei ca. 5 bar öffnet der Kolben eine weitere Querbohrung 12 in den drucklosen Abflußquerschnitt 13 der Zentrifuge. Damit ist der maximale Öldruck begrenzt, das Ventil geht in Abregelstellung und der zustätzlich geförderte Volumenstrom fließt drucklos durch den Abflußquerschnitt der Zentrifuge ab, wobei die Abdeckung 15 den Ölstrom direkt in den Austrittsquerschnitt einlenkt. Diese Anordnung ersetzt durch ein zweistufiges Ventil zwei einzelne Ventile.

Der in der Zentrifuge befindliche Zentrifugenrotor besteht aus einem Topf 16 mit Deckel 17. Beide Teile sind durch einen Bördel 18 gefügt. Ein Zwischenboden 19 trennt den Schmutzraum 20 vom Ölund Düsenraum 21. Ein Innenrohr 22 nimmt die beiden Gleitlager 23, 24 mit denen der Rotor auf der Achse 5 gelagert ist fluchtend auf.

Im Gehäusetopf 34 ist die aus einem Rohr gefertigte Achse 5 nur gesteckt und mit einem Elastomer Dichtstopfen 25 und einem Elastomer-Ring 26 oder in einer Variante beidseitig in Elastomer-Ringen gleichzeitig schwingungsarm gelagert und abgedichtet.

Der Bördel 18 liegt auf der dem Düsenboden gegenüberliegenden Zentrifugenseite. Damit wird der Durchmesser auf dem die Düsenbohrungen angeordnet sind nicht durch den für den Bördel-Gegenhalter freizuhaltenden Ringraum 27 eingeschränkt. Die Düsen haben deshalb, bezogen auf den Außendurchmesser und PKW-Abmessungen eine ca. 25 % größeren Hebelarm und erzeugen damit ein entsprechend größeres Drehmoment und größere Drehzahlen, was in besseren Abscheidegraden resultiert.

Das Innenrohr wird z.B. einseitig im Zentrifugentopf mit Deckel nicht eingebördelt sondern mit einer Arretierung 28 festgesetzt. In einer Variante des Zentrifugenrotors kann der sich als zäher, klebriger Ringmantel ablagernde Schmutz aus dem Rotor entnommen werden. Dazu wird im Rotor statt des Blechzwischenbodens 19 ein Hohlkörper aus Kunststoff 29 eingesetzt der zweiteilig konventionell oder einteilig durch Blasen hergestellt sein kann. Der Schmutzkuchen 30 lagert sich in diesem Hohlkörper ab und kann nach Öffnen des Rotors zusammen mit dem Kunststoffteil entnommen werden.

Dazu ist der Rotor öffenbar gestaltet, Topf 16 und Deckel 17 sind nicht verbördelt. Der Deckel wird mit einem in einer Sicke 31 eingelegten Runddrahtring 32 gegen den Innendruck im Topf gehalten. Dieser Ring ist demontierbar, so daß der Deckel nach Brechen der Arretierung 28 ebenfalls abgenommen werden kann. Ein O-Ring 33 dichtet den Ölraum in der Fügestelle ab.

Die am Zentrifugenrotor befindlichen Rückstoßdüsen und deren Ausgestaltung sind für den Nutzungsgrad der Zentrifuge von Bedeutung. Aus Kostengründen muß die Ausführung der Düsenöffnungen beim vorgesehenen Blech-Zentrifugenrotor sehr einfach sein. Die Öffnungen werden deshalb vorzugsweise von außen gestanzt. Bei gratfreier Ausführung wird damit ein Geschwindigkeitsbeiwert ϕ von ungefähr 0,96 und entsprechend hoher Rückstoßkräfte realisiert. Treten allerdings Stanzgrate innen an den Öffnungen auf reduziert sich ϕ auf Werte von ungefähr 0,7.

Als Abhilfe ist hier in eine gestanzte Öffnung 34 im Zentrifugentopf 16 ein Blindniet 35 als Düse eingesetzt. Wie bei dieser Technik üblich wird das unverformte Niet 36 auf einem Nagel 37 aufgesteckt. Dessen Außendurchmesser entspricht dem Soll-Innendurchmesser der fertigen Düse. Nach dem Einstecken der Kombination Niet auf Nagel von außen in die gestanzte Bohrung im Zentrifugentopf wird der innere Nietkopf durch Anziehen des Nagels auf einen Gegenhalter durch den Nagelkopf 38 geformt. Bei entsprechender Gestaltung dieses Nagelkopfes ergibt sich so eine gute Einlaufgeometrie für die Düse. Wenn der innere Nietkopf geformt ist, steigt die Kerbspannung im Nagel soweit an, daß dieser an der Sollbruchstelle 39 abreißt. Anschließend wird der in der fertigen Düse zunächst verbleibende Teil durch die Montagevorrichtung nach innen ausgestoßen. Die so geformte Düse erreicht einen Geschwindigkeitsbeiwert ϕ von ungefähr 0,98.

## Patentansprüche

1. Hydraulischer Fluidkreislauf, mit einer Fluidwanne für die Hydraulikflüssigkeit, einer Pumpe, einen Hauptstromfilter (2), einer im Nebenstrom angeordneten Zentrifuge (6), Verbrauchern, insbesondere Schmierstellen, und mindestens einem Ölrücklauf, wobei eine Vorrichtung zum Einstellen eines Mindestansprechdruckes für die Zentrifuge und eine Vorrichtung zur Einhaltung eines Maximaldrucks im gesamten Fluid kreislauf zwischen Hauptstromfilter und Zentrifuge vorgesehen ist, dadurch gekennzeichnet, daß diese Vorrichtungen in ein einziges Ventil (7) integriert sind.

2. Vorrichtung nach Anspruch 1, dadurch gekennzeichnet, daß das Ventil (7) wenigstens zwei wegversetzte Bohrungen (11, 12) aufweist.

3. Vorrichtung nach Anspruch 2, dadurch gekennzeichnet, daß das Ventil (7) über eine dritte Entlüftungsbohrung (14) verfügt, die einen drucklosen Fluidraum mündet.

4. Vorrichtung nach einem oder mehreren der vorgenannten Ansprüche, dadurch gekennzeichnet, daß das Ventil so angeordnet ist, daß eine erste Bohrung (11) mittels eines Fluid kanals mit der Achse (5) der Zentrifuge verbunden ist.

5. Vorrichtung nach Anspruch 4, dadurch gekennzeichnet, daß eine zweite Bohrung (12) mittels eines Rückflußkanals, vorzugsweise dem Zentrifugenabfluß, mit der Fluidwanne verbunden ist.

6. Vorrichtung nach einem oder mehreren der vorgenannten Ansprüche, dadurch gekennzeichnet, daß wenigstens eine Düse im Zentrifugenrotor durch einen Blind niet (35) ausgebildet ist.

7. Vorrichtung nach einem oder mehreren der vorgenannten Ansprüche, dadurch gekennzeichnet, daß das Innenrohr (22) des Zentrifugenrotors axial einseitig umgebördelt und auf der zweiten Seite mit einer Axialsicherung, vorzugsweise einer scheibenförmigen Arretierung (28) ohne Einstich im Innenrohr (22) befestigt ist.

8. Vorrichtung nach einem oder mehreren der vorgenannten Ansprüche, dadurch gekennzeichnet, daß das Innenrohr (22) des Zentrifugenrotors axial beidseitic mit einer Axialsicherung befestigt ist.

9. Vorrichtung nach einem oder mehreren der vorgenannten Ansprüche, dadurch gekennzeichnet, daß die aus einem Rohr gefertigte Achse (5) mit einem vorwiegend elastomeren Dichtstopfen (25) und/oder einem vorwiegend elastomeren Ring in den Gehäusetopf gesteckt ist.

10. Vorrichtung nach einem oder mehreren der vorgenannten Ansprüche, dadurch gekennzeichnet, daß ein Bördel (18) des Zentrifugenrotors, bestehend aus Topf (16) und Deckel (17) auf der dem Düsenboden entgegenstehenden Seite angeordnet ist.

11. Vorrichtung nach einem oder mehreren der vorgenannten Ansprüche, dadurch gekennzeichnet, daß im Zentrifugenrotor ein insbesondere aus Kunststoff bestehender Hohlkörper (29) eingesetzt ist.

12. Vorrichtung nach einem oder mehreren der vorgenannten Ansprüche, dadurch gekennzeichnet, daß der aus Kunststoff bestehende Hohlkörper (29) gleichzeitig den Zwischenboden der Zentrifuge mit ausbildet, so daß dieser als Einzelteil enffällt.

13. Vorrichtung nach einem oder mehreren der vorgenannten Ansprüche, dadurch gekennzeichnet, daß der Zentrifugenrotor mittels eines Verschlußmechanismusses öffenbar ist und mit einem Kunststoffhohlkörper (29) im Innern versehen ist.

## Claims

1. Hydraulic fluid circuit, having a fluid reservoir for the hydraulic liquid, a pump, a main flow filter (2), a centrifuge (6) disposed in the secondary flow, consumer means, more especially lubrication locations, and at least one oil return means, an apparatus for setting a minimum pressure of response for the centrifuge and an apparatus for maintaining a maximum pressure in the entire fluid circuit being provided between main flow filter and centrifuge, characterised in that these apparatuses are incorporated in a single valve (7).

2. Apparatus according to claim 1, characterised in that the valve (7) has at least two directionally offset bores (11, 12).

3. Apparatus according to claim 2, characterised in that the valve (7) has a third air-release bore (14) which terminates in a pressureless fluid chamber.

4. Apparatus according to one or more of the above-mentioned claims, characterised in that the valve is so disposed that a first bore (11) is connected to the spindle (5) of the centrifuge by means of a fluid duct.

5. Apparatus according to claim 4, characterised in that a second bore (12) is connected to the fluid reservoir by means of a return duct, preferably the centrifuge outlet.

6. Apparatus according to one or more of the above-mentioned claims, characterised in that at least one nozzle is formed by a blind rivet (35) in the centrifuge rotor.

7. Apparatus according to one or more of the above-mentioned claims, characterised in that the internal tube (22) of the centrifuge rotor is axially flanged on one side and, on the second side, is secured by an axial securing means, preferably a disc-shaped locking device (28), without any penetration in the internal tube (22).

8. Apparatus according to one or more of the above-mentioned claims, characterised in that the internal tube (22) of the centrifuge rotor is axially secured on both ends by an axial securing means.

9. Apparatus according to one or more of the above-mentioned claims, characterised in that the spindle (5), made from a tube, is inserted into the cup-shaped housing container with a predominantly elastomeric sealing plug (25) and/or a predominantly elastomeric ring.

10. Apparatus according to one or more of the above-mentioned claims, characterised in that a flange (18) of the centrifuge rotor, comprising cup-shaped container (16) and cover (17), is disposed on the side situated opposite the nozzle base.

11. Apparatus according to one or more of the above-mentioned claims, characterised in that a hollow body (29), formed more especially from plastics material, is inserted in the centrifuge rotor.

12. Apparatus according to one or more of the above-mentioned claims, characterised in that the plastics material hollow body (29) simultaneously forms the intermediate base of the centrifuge, so that it is not necessary to provide the latter component part.

13. Apparatus according to one or more of the above-mentioned claims, characterised in that the centrifuge rotor can be opened by means of a closure mechanism and is provided in the interior with a plastics material hollow body (29).

## Revendications

1. Circuit hydraulique comprenant une bâche à fluide pour le liquide hydraulique, une pompe, un filtre à écoulement principal (2), une centrifugeuse (6) montée dans un circuit auxiliaire, des consommateurs notamment des points de graissage et au moins un retour d'huile,
un dispositif pour régler au moins une pression minimale de mise en oeuvre de la centrifugeuse et un dispositif pour respecter une pression maximale dans l'ensemble du circuit de fluide entre le filtre à courant principal et la centrifugeuse,
caractérisé en ce que
ces dispositifs sont intégrés dans une seule soupape (7).

2. Dispositif selon la revendication 1,
caractérisé en ce que
la soupape (7) comporte au moins deux perçages (11, 12) décalés.

3. Dispositif selon la revendication 2,
caractérisé en ce que
la soupape (7) dispose d'un troisième perçage d'évacuation d'air (14) qui débouche dans une chambre à fluide sans pression.

4. Dispositif selon l'une ou plusieurs des revendications précédentes,
caractérisé en ce que
la soupape est disposée pour qu'un premier perçage (11) relie un canal de fluide à l'axe (5) de la centrifugeuse.

5. Dispositif selon la revendication 4,
caractérisé par
un second perçage (12) est relié à la bâche à fluide par l'intermédiaire d'un canal de retour, de préférence la sortie de la centrifugeuse.

6. Dispositif selon l'une ou plusieurs des revendications précédentes,
caractérisé par
au moins une buse réalisée dans le rotor de la centrifugeuse par un rivet aveugle (35).

7. Dispositif selon l'une ou plusieurs des revendications précédentes,
caractérisé en ce que
le tube intérieur (22) du rotor de la centrifugeuse est rabattu axialement d'un côté et est fixé sur le second côté avec une fixation axiale de préférence un dispositif de blocage (28) en forme de disque sans encoche dans le tube intérieur (22).

8. Dispositif selon l'une ou plusieurs des revendications précédentes,
caractérisé en ce que
le tube intérieur (22) du rotor de la centrifugeuse est fixé axialement des deux côtés par un moyen de blocage axial.

9. Dispositif selon l'une ou plusieurs des revendications précédentes,
caractérisé en ce que
l'axe (5) réalisé en un tube est engagé par un bouchon d'étanchéité (25) de préférence en élastomère et/ou un anneau de préférence en élastomère dans le pot constitué le boîtier.

10. Dispositif selon l'une ou plusieurs des revendications précédentes,
caractérisé par
un sertissage (18) du rotor de centrifugeuse composé du pot (16) et du couvercle (17) sur le côté opposé au fond de la buse.

11. Dispositif selon l'une ou plusieurs des revendications précédentes,
caractérisé en ce qu'
un corps creux (29) notamment en matière plastique est logé dans le rotor de la centrifugeuse.

12. Dispositif selon l'une ou plusieurs des revendications précédentes,
caractérisé en ce que
le corps creux (29) en matière plastique constitue en même temps le fond intermédiaire de la centrifugeuse réalisé en une seule pièce.

13. Dispositif selon l'une ou plusieurs des revendications précédentes,
caractérisé en ce que
le rotor de la centrifugeuse peut être ouvert par un mécanisme de fermeture et muni intérieurement d'un corps creux (29) en matière plastique.
